# EUROPEAN PATENT APPLICATION

(11) **EP 4 373 218 A1**
(43) Date of publication of application: **22.05.2024**
(21) Application number: 22862406.0
(22) Date of filing: 30.09.2022
(51) Int. Cl.: H05B 45/59, H05B 45/355, H05B 45/345, H05B 45/395, H02M 1/42, H02M 7/00, H05B 45/36

(54) **FLICKER ELIMINATION LED DRIVING CIRCUIT AND DRIVING CONTROL METHOD THEREFOR**

(71) Applicant: Shanghai Bright Power Semiconductor Co., Ltd., Shanghai 201206 (CN)
(72) Inventor: FAN, Minmin, Shanghai 201206 (CN); CHEN, Limin, Shanghai 201206 (CN)
(74) Representative: Nordmeyer, Philipp Werner
(86) International application number: PCT/CN2022/123255
(87) International publication number: WO 2024/065669

(57) **Abstract**

An LED driver circuit is used to drive an LED load and to mitigate flicker caused by ripple from mains power. The driver circuit includes: a rectifier bridge set for rectifying the mains power and having at least one set of output terminals; a load branch being capable to be coupled into two different current paths, the load branch including an LED load and LED constant-current controller; and a capacitive branch at least including an input capacitor. With a turn-on voltage of the load branch being taken as a threshold, one of the rectified mains power and the input capacitor is selected as a power source for the load branch. This LED driver circuit is simple in structure, highly reliable and capable of flicker elimination, and has optimized input current harmonic rejection performance that can meet the requirements of various relevant standards.

## Description

### TECHNICAL FIELD

The present invention relates to electronic circuits and, in particular, to flicker-free LED driver circuits and a method of drive and control thereof.

### BACKGROUND

Light-emitting diode (LED) lighting is green, energy-saving and environment-friendly and has become the most prevalent lighting approach at present. LED loads used in LED lighting are driven by direct current (DC), and their brightness is directly related to a current flowing therethrough. Therefore, it is necessary to arrange an LED driver circuit between alternating current (AC) mains and an LED load, which acts to convert AC to DC and ensures that a constant current flows through the LED load to provide a constant brightness for LED lighting.

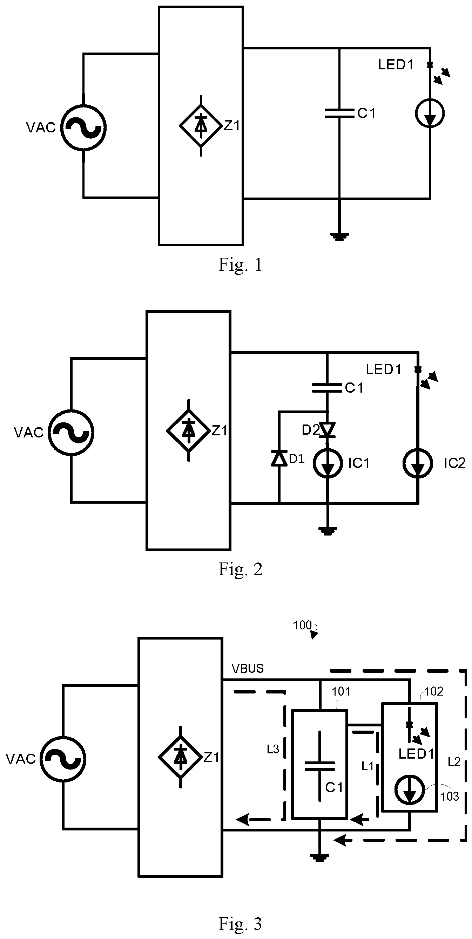

However, during LED drive and control, low-frequency ripple in the input AC mains power tends to be introduced into the DC output. Since such low-frequency ripple may cause flicker in the LED lighting device, which can be perceived by human eyes, it should be avoided as much as possible. As shown in Fig. 1, typically, after being rectified, the mains power is received and filtered by the LED driver circuit, which then converts DC power on an input capacitor C1 into a form suitable for driving the LED load. The magnitude of low-frequency ripple present at an output of the driver circuit largely depends on the filtering capability of the input capacitor C 1. If the capacitance of the input capacitor is small, significant voltage ripple will be generated in each half cycle, and excessive low-frequency ripple will be reflected in the LED current to cause flicker. In order to avoid such flicker, the capacitance of the input capacitor C1 can be increased to suppress the influence of the low-frequency ripple. However, increasing the capacitance of the input capacitor C1 may lead to significant current distortion at the input terminal in each half cycle of the mains power, which may result in a degraded power factor and make it impossible to meet the sub-harmonic requirements of various environmental certifications.

Fig. 2 shows a conventional flicker-free LED driver circuit design. As shown in Fig. 2, in order to meet those sub-harmonic requirements, the conventional flicker-free LED driver circuit adds a constant-current loop to the input capacitor branch, which controls a charging current for the input capacitor so as to reduce current distortion at the input, thereby enhancing the sub-harmonic performance. However, in order to enable the input capacitor to satisfactorily power the LED load around the zero crossings of each half cycle, the current capacity of the high-voltage constant-current loop connected in series with the input capacitor must be high enough to provide sufficient input power. This is costly. In addition, since the input capacitor is not directly connected to the input terminal, the design has high input impedance and is not able to absorb a high voltage present on a DC bus after rectifying the mains power. Consequently, in the event of a voltage spike or surge being caused by a voltage variation at the input terminal, the constant-current loop tends to be damaged. Therefore, the system's reliability is poor and needs to be improved by employing power devices with higher voltage withstand capability.

Therefore, it is desirable to develop a simpler and more reliable flicker-free LED driver circuit with satisfactory input current harmonic rejection performance.

### SUMMARY OF THE INVENTION

In view of the above-described problems with the conventional LED driver circuits and flicker-free LED driver circuits, there is proposed herein a novel LED driver circuit for receiving and converting mains power to drive an LED load and to mitigate flicker caused by a ripple from the mains power. The LED driver circuit includes: a rectifier bridge set having one set of input terminals and at least one set of output terminals, wherein the rectifier bridge set is configured to receive and rectify the mains power and to output the rectified mains power from the output terminals; a capacitive branch connected between one set of output terminals of the rectifier bridge set, wherein the capacitive branch at least comprises an input capacitor; and a load branch comprising an LED load and LED constant-current controller, wherein in each half cycle of the mains power, when a voltage of the rectified mains power from the rectifier bridge set is lower than a turn-on voltage of the load branch, the input capacitor supplies power to the load branch, and wherein when a voltage of the rectified mains power from the rectifier bridge set is equal to or above the turn-on voltage of the load branch, the load branch receives power directly from the output terminals of the rectifier bridge set, and the input capacitor stops supplying power to the load branch.

In one embodiment, the capacitive branch and the load branch may be connected to an identical set of output terminals of the rectifier bridge set, wherein the capacitive branch further comprises an isolation device configured to enable charging from the output terminals of the rectifier bridge set to the input capacitor and to disable discharging from the input capacitor to the output terminals of the rectifier bridge set.

In one embodiment, the isolation device may be a diode.

In one embodiment, the rectifier bridge set may have two sets of output terminals that are a first set of output terminals and a second set of output terminals, wherein the capacitive branch is connected to the first set of output terminals, wherein the load branch is connected to the second set of output terminals, and wherein the second set of output terminals is distinct from the first set of output terminals.

In one embodiment, the first and second sets of output terminals may share a common output terminal, wherein the rectifier bridge set comprises six diodes, the first set of output terminals forming a first rectifier bridge together with a first diode, a second diode, a third diode and a fourth diode, and the second set of output terminals forming a second rectifier bridge together with a fifth diode and a sixth diode, and wherein the third and fourth diodes are connected to the common output terminal.

In one embodiment, in each half cycle of the mains power, the voltage of the rectified mains power from the rectifier bridge set rising above the turn-on voltage of the load branch may be earlier than the rectifier bridge set beginning charging the input capacitor through the output terminals thereof.

In one embodiment, the load branch may be coupled into two different current paths, wherein a first current path is applied for the input capacitor supplying power to the load branch; and wherein a second current path is applied for the output terminals of the rectifier bridge set supplying power to the load branch.

In one embodiment, the load branch may have three terminals, wherein the first current path is formed via a first terminal and a second terminal, and wherein the second current path is formed via the first terminal and a third terminal.

In one embodiment, the LED constant-current controller may comprise a first constant-current source and a second constant-current source, wherein the first constant-current source is configured to control a current flowing directly from one set of output terminals of the rectifier bridge set toward the LED load, and wherein the second constant-current source is configured to control a current flowing from the input capacitor toward the LED load.

In one embodiment, negative output terminals of one set of output terminals of the rectifier bridge set may be connected to a negative terminal of the input capacitor, wherein the first constant-current source is arranged upstream of the LED load in a path of the current flowing directly from the set of output terminals of the rectifier bridge set toward the LED load, and wherein the second constant-current source is arranged upstream of the LED load in a path of the current flowing from the input capacitor toward the LED load.

In one embodiment, the first and second constant-current sources may identically share a current feedback signal.

In one embodiment, the first constant-current source may have a first current reference value, and the second constant-current source may have a second current reference value smaller than the first current reference value.

In one embodiment, positive output terminals of one set of output terminals of the rectifier bridge set may be connected to a positive terminal of the input capacitor, wherein the first constant-current source is arranged downstream of the LED load in a path of the current flowing directly from the set of output terminals of the rectifier bridge set toward the LED load, and wherein the second constant-current source is arranged downstream of the LED load in a path of the current flowing from the input capacitor toward the LED load.

In one embodiment, the first and second constant-current sources may use distinct feedback signals and are grounded separately.

In one embodiment, the first and second constant-current sources may share an identical current reference value.

In one embodiment, the driver circuit may further comprise a bleeder branch connected between input terminals of the mains power or between one set of output terminals of the rectifier bridge set, wherein the bleeder branch is configured to controllably generate a bleeder current at the input terminals of the mains power.

In one embodiment, in each half cycle, the bleeder branch starts generating the controllable bleeder current no later than the voltage of the rectified mains power rising to reach the turn-on voltage of the load branch.

In one embodiment, in each half cycle, the bleeder branch stops providing the controllable bleeder current no earlier than the voltage of the rectified mains power dropping below the turn-on voltage of the load branch.

In one embodiment, the driver circuit may be configured to, in each half cycle of the mains power, enable an input current to the driver circuit to rise to 5% of a peak value of the input current at a phase angle not greater than 60 degrees.

In one embodiment, the driver circuit may be configured to, in each half cycle of the mains power, enable an input current to the driver circuit to drop to 5% of a peak value of the input current at a phase angle not smaller than 90 degrees.

In another aspect, there is proposed an LED driver circuit for receiving and converting mains power to drive an LED load and to mitigate flicker caused by ripple from the mains power. The LED driver circuit includes an input capacitor capable of receiving the rectified mains power for performing charging actions, a rectifier bridge set for rectifying the mains power, and an LED load, wherein in each half cycle of the mains power, a turn-on voltage of a branch of the LED load serves as a threshold of the rectified mains power for alternatively selecting the input capacitor or the rectified mains power as a power supply of the LED load.

In one embodiment, when a voltage of the rectified mains power is lower than the turn-on voltage of the branch of the LED load, the LED load and the input capacitor may form a first current loop; and wherein when a voltage of the rectified mains power is equal to or above the turn-on voltage of the branch of the LED load, the first current loop may be opened and a set of output terminals of the rectifier bridge set and the LED load may form a second current loop.

In one embodiment, in a first half of each half cycle of the mains power, when the voltage of the rectified mains power rises to reach a voltage across the input capacitor, the set of output terminals of the rectifier bridge set may further form, together with the input capacitor, a third current loop for charging the input capacitor.

In one embodiment, in the first half of each half cycle of the mains power, the second current loop is formed earlier than the third current loop.

In one embodiment, in a second half of each half cycle of the mains power, when the voltage of the rectified mains power is lower than the voltage across the input capacitor, the third current loop may be opened.

In one embodiment, the driver circuit may comprise an isolation device for controlling the formation and the opening of the third current loop.

In one embodiment, the isolation device may be a diode connected to the input capacitor.

In one embodiment, the rectifier bridge set may have two sets of output terminals that are distinct, wherein a first set of output terminals is configured to form the second current loop, and wherein a second set of output terminals is configured to form the third current loop.

In one embodiment, the first and second sets of output terminals may have a common terminal, and wherein the common terminal is applied both in the second and third current loops.

In one embodiment, operational currents flowing through the first and second current loops are both constant.

In one embodiment, the first and second current loops may identically share a current feedback signal, wherein the current feedback signal is configured to keep operational currents of both the first and second current loops constant.

In one embodiment, negative output terminals of one set of the rectifier bridge set may be connected to a negative terminal of the input capacitor and serve as a ground terminal for both the first and second current loops, wherein the first current loop is constant current controlled feedback based on a first reference current value, and wherein the second current loop is constant current feedback controlled based on a second reference current value.

In one embodiment, the second reference value may be greater than the first reference value, configured to turn the first current loop off after the second current loop is turning on by virtue of the current feedback signal being always greater than the first reference value.

In one embodiment, positive output terminals of one set of output terminals of the rectifier bridge set may be connected to a positive terminal of the input capacitor and serve as a positive input terminal for the first and second current loops, wherein the first and second current loops have distinct current feedback signals and are grounded separately, wherein the current feedback signals are compared with a first reference current value and a second reference current value in order to respectively control operational currents of the first and second current loops to maintain constant.

In one embodiment, the first reference current value may be equal to the second reference current value.

In one embodiment, the driver circuit may further comprise a fourth current loop formed by a bleeder branch with input terminals of the mains power or the set of output terminals of the rectifier bridge set, wherein the fourth current loop is configured to controllably generate a bleeder current in case of a presence of a thyristor dimmer in a circuit environment.

In one embodiment, in each half cycle of the mains power, the fourth current loop is formed no later than the second current loop.

In one embodiment, in each half cycle of the mains power the fourth current loop is opened no earlier than the second current loop.

In one embodiment, the driver circuit may be configured to, in each half cycle of the mains power, enable an input current to the driver circuit to rise to 5% of a peak value of the input current at a phase angle not greater than 60 degrees.

In one embodiment, the driver circuit may be configured to, in each half cycle of the mains power, enable an input current to the driver circuit to drop to 5% of a peak value of the input current at a phase angle not smaller than 90 degrees.

In yet another aspect, there is proposed a method for controlling a light-emitting diode (LED) driver circuit to mitigate a flicker problem therewith, which includes: rectifying mains power and outputting the rectified mains power from rectifier output terminals; charging an input capacitor by one of the rectifier output terminals; and supplying power to an LED load by one of the rectifier output terminals or by the input capacitor, wherein a turn-on voltage of a branch of the LED load serves as a threshold of the rectified mains power for alternatively selecting the input capacitor or one of the rectifier output terminals as a power supply of the LED load.

In one embodiment, alternatively selecting the input capacitor or one of the rectifier output terminals as a power supply of the LED load by a turn-on voltage of a branch of the LED load serving as a threshold of the rectified mains power may include: when the voltage of the rectified mains power is lower than the turn-on voltage of the branch of the LED load, a first current loop is formed by the LED load and the input capacitor; and when the voltage of the rectified mains power is equal to or above the turn-on voltage of the branch of the LED load, the first current loop is opened and a second current loop is formed by the rectifier output terminal and the LED load.

In one embodiment, in each half cycle of the mains power, when the voltage of the rectified mains power is higher than a voltage across the input capacitor, a third current loop for charging the input capacitor may be further formed by one of the rectifier output terminals and the input capacitor.

In the LED driver circuits and the method for control thereof proposed in the present invention, by taking the turn-on voltage of the branch where the LED load is arranged as a threshold, power source switching is carried out between the rectifier bridge output and the mains power, effectively reducing ripple from the mains power and correcting the waveform of the input current. As a result, in addition to flicker elimination, optimized input current harmonic rejection performance is achieved, which satisfies the requirements of relevant standards. The driver circuits also have the advantages of a simple structure, low cost and high reliability.

### BRIEF DESCRIPTION OF THE DRAWINGS

Throughout the following drawings, identical, analogous or corresponding features or functions are indicated by identical numerals, in which:
Fig. 1 is a schematic diagram illustrating the structure of a conventional LED driver circuit;
Fig. 2 is a schematic diagram illustrating the structure of a conventional flicker-free LED driver circuit.
Fig. 3 is a schematic diagram illustrating the structure of an LED driver circuit 100 according to one embodiment of the present invention;
Fig. 4 schematically compares waveforms of the LED driver circuit 100 according to the embodiment of Fig. 3 and the conventional LED driver circuit of Fig. 1 over half cycles of mains power;
Fig. 5 is a schematic diagram illustrating the structure of an LED driver circuit 500 according to one embodiment of the present invention;
Fig. 6 is a schematic diagram illustrating the structure of an LED driver circuit 600 according to another embodiment of the present invention;
Fig. 7 is a schematic diagram illustrating the structure of an LED driver circuit 700 according to yet another embodiment of the present invention;
Fig.8 is a schematic diagram illustrating the structure of an LED driver circuit 800 according to still yet another embodiment of the present invention;
Fig. 9 is a schematic diagram illustrating the structure of a load branch 102 according to one embodiment of the present invention;
Fig. 10 is a schematic diagram illustrating the structure of a load branch 102 according to another embodiment of the present invention;
Fig. 11 is a schematic diagram illustrating the structure of an LED driver circuit 1100 according to a further embodiment of the present invention; and
Fig. 12 is a flowchart of a method for controlling an LED driver circuit according to one embodiment of the present invention.

### DETAILED DESCRIPTION

Below, specific embodiments of the present invention will be described in detail. It is to be noted that the embodiments described herein are illustrative only and are not intended to limit the invention. In the following description, numerous details are set forth so that a more thorough understanding of the present invention may be acquired. However, it would be apparent to one skilled in the art that the invention may be practiced without these specific details. In other instances, well-known circuits, materials or methods have not been described in order to avoid unnecessary obscuring of the present invention.

Reference throughout this specification to "one embodiment", "an embodiment", "one example" or "an example" means that a particular feature, structure or characteristic described in connection with the embodiment or example is included in at least one embodiment of the present invention. Thus, appearances of the phrases "in one embodiment", "in an embodiment", "in one example" or "in an example" in various places throughout this specification are not necessarily all referring to the same embodiment or example. Furthermore, the particular features, structures or characteristics may be combined in any suitable combinations and/or sub-combinations in one or more embodiments or examples. In addition, it is appreciated that the figures provided herewith are for explanation purposes to persons ordinarily skilled in the art and that the drawings are not necessarily drawn to scale. It will be understood that when an element is referred to as being "connected to" or "coupled to" another element, it can be directly connected or coupled to the other element, or intervening elements may also be present. In contrast, when an element is referred to as being "directly connected to" or "directly coupled to" another element, there are no intervening elements present. Throughout the drawings, like numerals indicate like elements. As used herein, the term "and/or" includes any and all combinations of one or more of the associated listed items.

It will be understood that although the terms "first", "second", "third", etc. may be used herein to describe various elements, these elements should not be limited by these terms. These terms are used only to distinguish one element from another element. Thus, a first element discussed below could be termed a second element without departing from the teachings of the present invention. As used herein, the term "and/or" includes any and all combinations of one or more of the associated listed items.

Fig. 3 is a schematic diagram illustrating the structure of an LED driver circuit 100 according to one embodiment of the present invention. As shown in Fig. 3, the LED driver circuit 100 is used in a mains power environment and includes: a rectifier bridge set Z1; a capacitive branch 101 including an input capacitor C1; and a load branch 102 including an LED load LED1 and LED constant-current controller 103. A sinusoidal wave of the mains power passes through the rectifier bridge Z1 and is rectified thereby into a DC wave with periodic dome-shaped crests, which is output from an output terminal of the rectifier bridge set Z 1. The rectifier bridge set Z1 includes at least one set of output terminals. That is, the rectifier bridge set Z1 may have only one set of output terminals or more than one set of output terminals (e.g., two sets of output terminals). The LED driver circuit 100 additionally converts the rectified mains power VBUS output from the rectifier bridge set Z1 and uses the converted power to drive the LED load LED1. The capacitive branch 101 may be connected to one set of output terminals of the rectifier bridge set Z1, and in each half cycle, the rectified mains power VBUS is delivered via this set of output terminals into the capacitive branch 101, where it is received by the input capacitor C1 for charging thereof. The load branch 102 may be connected to one set of output terminals of the rectifier bridge set Z1, and the rectified mains power VBUS is delivered via this set of output terminals into the load branch 102 to drive the LED load. It is to be noted that the capacitive branch 101 and the load branch 102 may be connected to the identical set of output terminals of the rectifier bridge set Z1, or respectively to two different sets of output terminals thereof. Here and throughout this specification, for ease of understanding, it is assumed that the rectified mains power is output from the sets of output terminals of the rectifier bridge set at the same level and collectively denoted as VBUS, with any possible differences between the sets of output terminals being neglected.

In each half cycle of the mains power, a turn-on voltage of a branch of the LED load serves as a threshold of the rectified mains power for alternatively selecting the input capacitor or the rectified mains power as a power supply of the LED load. That is, in each half cycle of the mains power, when a voltage of the rectified mains power from the rectifier bridge set Z1 is lower than the turn-on voltage of the load branch 102, the load branch 102 is powered by the input capacitor C1; when the voltage of the rectified mains power from the rectifier bridge set Z1 is equal to or above the turn-on voltage of the load branch 102, the load branch 102 receives power directly from the output terminals of the rectifier bridge set Z1 and the input capacitor C1 stops supplying power to the load branch 102. Here and throughout this specification, by the phrases "the input capacitor C1 supplies power to the load branch 102" and "the input capacitor C1 serves as a power source for the LED load LED1", it is meant that the load branch 102 receives power that is stored in the input capacitor C1, and the case of providing external electrical power to the load branch 102 via the input capacitor C1 is excluded.

Specifically, in the embodiment shown in Fig. 3, when the voltage of the rectified mains power VBUS is lower than the turn-on voltage of the LED load branch 102, the LED load LED1 and the input capacitor C1 forms a first current loop L1. When the voltage of the rectified mains power VBUS is equal to or above the turn-on voltage of the LED load branch 102, the first current loop is opened, and one set of output terminals of the rectifier bridge set Z1 and the LED load LED1 forms a second current loop L3.

In one embodiment, in the first half of each half cycle of the mains power, when the voltage of the rectified mains power VBUS rises to reach a voltage across the input capacitor C1, one set of output terminals of the rectifier bridge set Z1 and the input capacitor C1 form a third current loop L3, which charges the input capacitor C1 to replenish energy of the input capacitor C1 used in powering the LED load LED1. This arrangement allows the LED driver circuit 100 to adopt the conventional simple control approach to charge the input capacitor C1 while avoid the co-existence of the third and first current loops, which is unfavorable to the charging of the input capacitor C1.

In one embodiment, in the second half of each half cycle of the mains power, when the voltage of the rectified mains power VBUS drops below a voltage across the input capacitor C1, the third current loop is opened, making it impossible for the input capacitor C1 to discharge electricity to the LED load LED1 via the third or another current loop formed by the output terminals of the rectifier bridge Z1. This can reduce energy loss of the input capacitor C1.

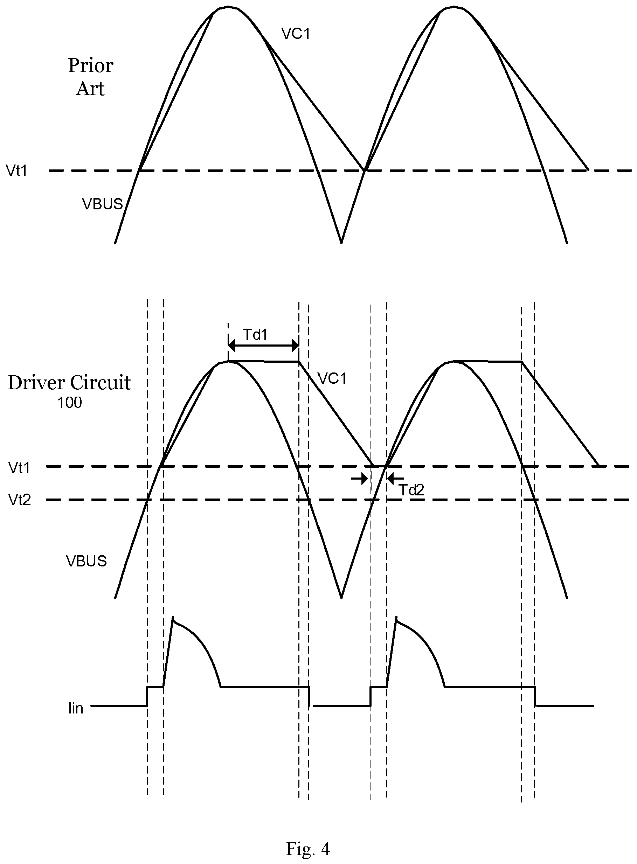

Fig. 4 schematically compares waveforms of the LED driver circuit 100 according to the embodiment of Fig. 3 and the conventional LED driver circuit of Fig. 1. The waveforms are of the voltage on the input capacitor C1 varying as a function of an input current over half cycles of the mains power. In the conventional design of Fig. 1, a switch is made between the power sources according to a comparison between the voltage across the input capacitor C1 and the voltage of the rectified mains power. Differing from this, as shown in Fig. 4, in order to ensure that the LED load is continuously on without flickering, when the input capacitor C1 is supplying power to the LED load, its voltage shall not be lower than the threshold turn-on voltage of the branch where the LED load is arranged. In the conventional design shown in Fig. 1, upon the input voltage VBUS peaking in one half cycle of the mains power, it stops charging the input capacitor C1 and, at the same time, the input capacitor C1 begins to act as a power source for the LED load. The voltage VC1 on the input capacitor C1 drops until VBUS rises above the voltage across the input capacitor C1 in the next half cycle (at Vt1). In contrast, in the embodiment of Fig. 3, the turn-on voltage of the load branch 102 is taken as a threshold (at Vt2) for switching the power source, and in each half cycle of the mains power, the load branch 102 is powered by the mains power, with the voltage VC1 on an output capacitor C1 remaining constant, at least within a first delay interval Td1 in the second half following peaking of the rectified voltage. In this way, the rectified mains power VBUS serves as a power source for a longer period of time, reducing the time interval in each half cycle of the mains power in which the input capacitor C1 serves as a power source. This reduces voltage ripple on the input capacitor C1 in each cycle, mitigating the problem of flicker caused by ripple in the mains power in case of the input capacitor C1 having a small capacitance. Therefore, the input capacitor C1 is allowed to have a smaller capacitance, which can result in an increased power factor.

Further, in some embodiments, the capacitance of the input capacitor C1 and the turn-on voltage of the LED load branch may be appropriately configured so that, in each half cycle of the mains power, a time instant at which the voltage of the rectified mains power VBUS rises above the turn-on voltage of the load branch is earlier than a time instant at which the output terminals of the rectifier bridge set Z1 begin charging the input capacitor C1. That is, the second current loop is formed earlier than the third current loop. In this way, in the first half of each half cycle, after VBUS rises to reach the turn-on threshold of the LED load branch, it begins supplying power to the LED load branch a second delay interval Td2 earlier. It is at this time that the voltage VC1 on the input capacitor stops decreasing, without needing to wait for VBUS to further rise to a level allowing charging the input capacitor C1. As a result, the time interval in each half cycle of the mains power in which the input capacitor C1 powers the LED load 1 is additionally reduced, resulting in even less ripple from the mains power and even better flicker elimination performance.

Furthermore, the design of the embodiment shown in Fig. 3 also helps improve input current harmonic rejection performance in order to make it meet the requirements of relevant standards regarding harmonics. For example, the ErP standard requires that, in each half cycle (180 degrees) of the mains power, the input current ramps up to 5% of the peak value at a phase angle not greater than 60 degrees. It also requires the input current to peak before a phase angle smaller than 65 degrees and to decrease to 5% of the peak value at a phase angle not smaller than 90 degrees. The conventional design shown in Fig. 1 can barely meet these requirements mainly because, in this design, the input current solely depends on a charging current for the input capacitor C1 and is hard to control. In contrast, as shown in Fig. 4, through forming the second current loop earlier than the third current loop, a step is established in the waveform of the input current Iin, which enables the input current to supply power earlier to the LED load branch 102 through the second current loop and facilitates satisfaction of the requirement that the input current ramps up to 5% of the peak value at a phase angle not greater than 60 degrees. Moreover, the presence of the second current loop can per se contribute to meeting the requirements of the standards regarding harmonics. In each half cycle of the mains power, after a phase angle of 90 degrees phase angle, the voltage on the input capacitor C1 reaches the peak value, opening the third current loop and thus eliminating the charging current for the input capacitor C1. However, the input current Iin is still present due to a power supply current for the LED load in the second current loop. This can facilitate satisfaction of the requirement that the input current decreases to 5% of the peak value at a phase angle not smaller than 90 degrees.

On the other hand, compared with the conventional LED driver circuit design of Fig. 2, in the LED driver circuit 100 according to the embodiment of Fig. 3, instead of using a constant-current source with high current-load capability, the input capacitor C1 is directly charged by the rectified mains power in each half cycle. Additionally, compared with the LED driver circuit of Fig. 2, the input capacitor C1 supplies power to the LED load branch for a shorter period of time and thus loses less energy in each half cycle. In this way, it is unnecessary to provide a separate constant-current circuit for charging of the input capacitor in the LED driver circuit 100, as well as a large charging current for the constant-current circuit, resulting in structural simplification and a reduction in cost.

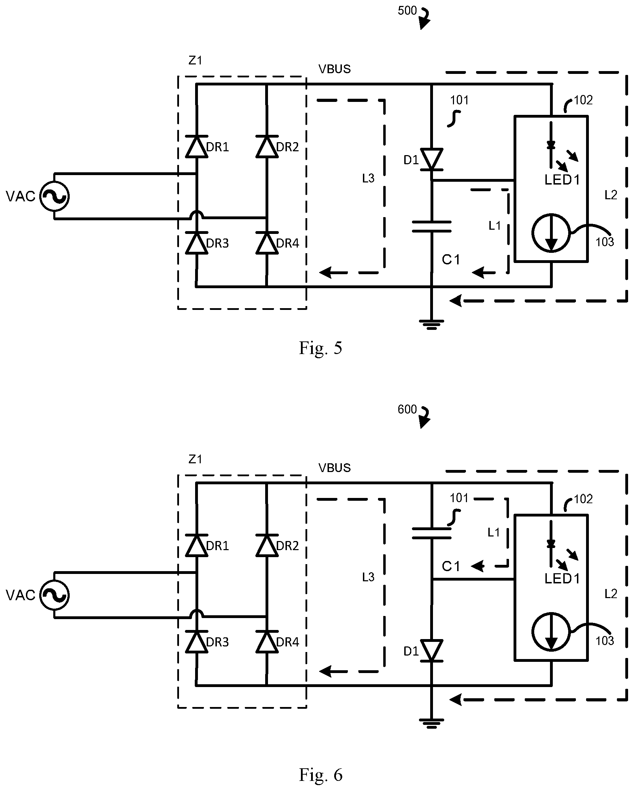

Fig. 5 is a schematic diagram illustrating the structure of an LED driver circuit 500 according to one embodiment of the present invention. In the embodiment of Fig. 5, the rectifier bridge set Z1 has a single set of output terminals, in this way, the capacitive branch 101 and the load branch 102 are both connected to the identical set of output terminals of the rectifier bridge set Z1. The capacitive branch 101 further includes an isolation device D1 for controlling formation and opening of the third current loop. The isolation device D1 is configured to enable charging from the output terminals of the rectifier bridge set to the input capacitor and to disable discharging from the input capacitor to the output terminals of the rectifier bridge set. In one example, the isolation device D1 may be implemented as a diode connected between the input capacitor C1 and the output terminals. In other examples, the isolation device D1 may be alternatively implemented as a combination of another conventional device with isolation functions and a control circuit, which is capable of switching control of the third current loop. For example, it may be implemented as a controlled switch for detecting and controlling a voltage across opposite ends of the isolation device. The present invention is not limited in this regard.

In the embodiment of Fig. 5, the load branch 102 has three terminals. A negative one of the output terminals of the rectifier bridge set Z1 is connected together with one terminal of an output capacitor C1 to a third terminal of the load branch 102, and a positive one of the output terminals of the rectifier bridge set Z1 is connected to a second terminal of the load branch 102. Specifically, an anode of the isolation device D1 that is implemented as a diode is connected to the positive output terminal of the rectifier bridge set Z1, and a cathode thereof is connected to a first terminal of the input capacitor C1. A second terminal of the input capacitor C1 is connected to the negative output terminal of the rectifier bridge set. A first terminal of the input capacitor C1 is connected to the first terminal of the load branch 102. With this design, the two ends of the input capacitor C1, and the first and third terminals of the load branch 102 can form the first current loop for supplying power to the LED load branch.

Fig. 6 is a schematic diagram illustrating the structure of an LED driver circuit 600 according to another embodiment of the present invention. Similar to the embodiment of Fig. 5, the isolation device D1 is also implemented as a diode in the embodiment of Fig. 6. The embodiment of Fig. 6 differs from that of Fig. 5 in having a different common terminal of the input capacitor and the output terminals of the rectifier bridge set. The positive output terminal of the rectifier bridge set Z1 is connected together with one terminal of the output capacitor C1 to the first terminal of the load branch 102. The negative output terminal of the rectifier bridge set Z1 is connected to the third terminal of the load branch 102. Specifically, the anode of the isolation diode D1 is connected to the second terminal of the input capacitor C1, and the cathode is connected to the negative output terminal of the rectifier bridge set Z 1. A first terminal of the output capacitor C1 is connected to both the positive output terminal of the rectifier bridge set Z1 and the first terminal of the load branch 102. The second terminal of the input capacitor C1 is connected to the second terminal of the load branch 102. With this design, the two terminals of the input capacitor C1 and the load branch 102 can form the first current loop for supplying power to the LED load branch.

Compared with the conventional LED driver circuit of Fig. 2, the LED driver circuits 500, 600 of Figs. 5 and 6 can mitigate the problem of flicker caused by ripple from the mains power, satisfy the requirements of standards regarding input current harmonics and provide an increased power factor. Moreover, they have enhanced ability to absorb spikes, glitches and other abnormal fluctuations in the voltage of the rectified mains power applied to the input capacitor C1, which reduces the requirements for power elements used in the LED driver circuits and improves their reliability.

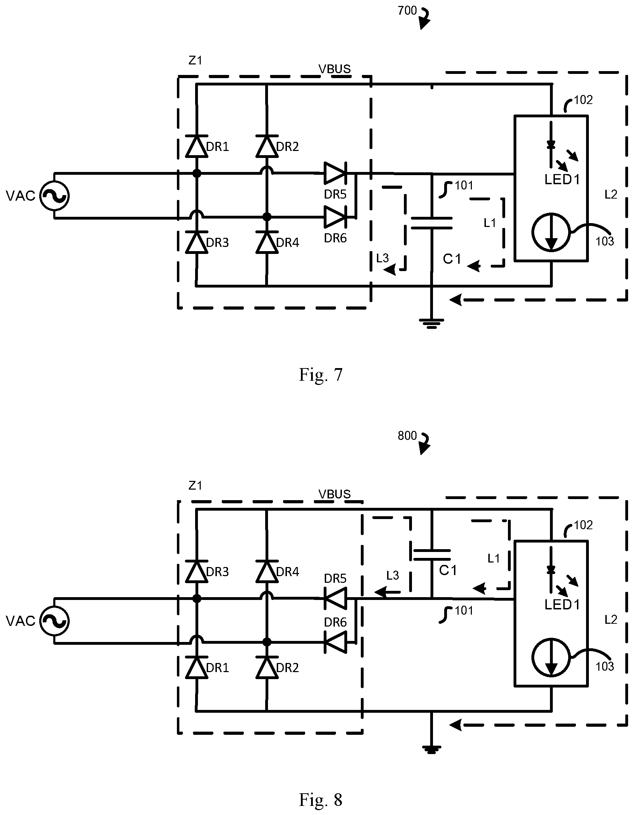

Fig. 7 is a schematic diagram illustrating the structure of an LED driver circuit 700 according to yet another embodiment of the present invention. As shown in Fig. 7, the rectifier bridge set Z1 has two sets of output terminals. The capacitive branch 101 is connected to a first one P1 of the sets of output terminals of the rectifier bridge set Z1, and the load branch 102 is connected to a second one P2 of the sets of output terminals of the rectifier bridge set Z 1. The first set of output terminals P1 of the rectifier bridge set Z1 is distinct from the second set of output terminals P2. Here and throughout this specification, the term "distinct" means that the first and second sets of output terminals P1, P2 output signals from separate rectifier bridges without mutual interference of the output signals. With this design, the first set of output terminals P1 together with the load branch 102 forms the second current loop, and the second set of output terminals P2 together with the capacitive branch 101 forms the third current loop.

In the embodiment shown in Fig. 7, as the capacitive branch 101 is no longer connected in parallel to the load branch 102, it may include only the input capacitor C1. Since the first and second sets of output terminals of the rectifier bridge set Z1 are distinct from each other, at the end of charging of the input capacitor C1 with the rectified mains power, no discharging loop will be formed between the input capacitor and the first output terminals of the rectifier bridge set Z 1. Therefore, a separate isolation element is not necessary.

The first and second sets of output terminals of the rectifier bridge set Z1 has a common output terminal included in both the second and third current loops. In the illustrated embodiment, the negative terminals of the first and second sets of output terminals serve as a common output terminal. In other embodiments, it is also possible that the positive terminals of the first and second sets of output terminals serve as a common output terminal, as detailed below in the embodiment of Fig. 8. The rectifier bridge set Z1 includes six diodes. The first set of output terminals forms a first rectifier bridge together with first, second, third and fourth ones DR1-DR4 of the diodes, and the second set of output terminals forms a second rectifier bridge together with the third diode DR3, the fourth diode DR4 and fifth and sixth ones DR5-DR6 of the diodes. The third diode DR3 and the fourth diode DR4 are connected to the common output terminal, that is, connected to negative terminals of the first and second sets of output terminals. More specifically, the negative terminal is connected to both an anode of the third diode DR3 and an anode of the fourth diode DR4.

Fig. 8 is a schematic diagram illustrating the structure of an LED driver circuit 800 according to still yet another embodiment of the present invention. This embodiment differs from that of Fig. 7 in that the positive terminals of the first and second sets of output terminals serve as a common output terminal. The rectifier bridge set Z1 includes six diodes. The first set of output terminals forms a first rectifier bridge together with first, second, third and fourth ones DR1-DR4 of the diodes, and the second set of output terminals forms a second rectifier bridge together with the third diode DR3, the fourth diode DR4 and fifth and sixth ones DR5-DR6 of the diodes. The third diode DR3 and the fourth diode DR4 are connected to the common output terminal, that is, connected to positive terminals of the first and second sets of output terminals. More specifically, the positive terminal is connected to both a cathode of the third diode DR3 and a cathode of the fourth diode DR4.

Similar to the LED driver circuit 700, the design of the LED driver circuit 800 allows the capacitive branch 101 to include only the capacitor C1 and dispense with a separate isolation device.

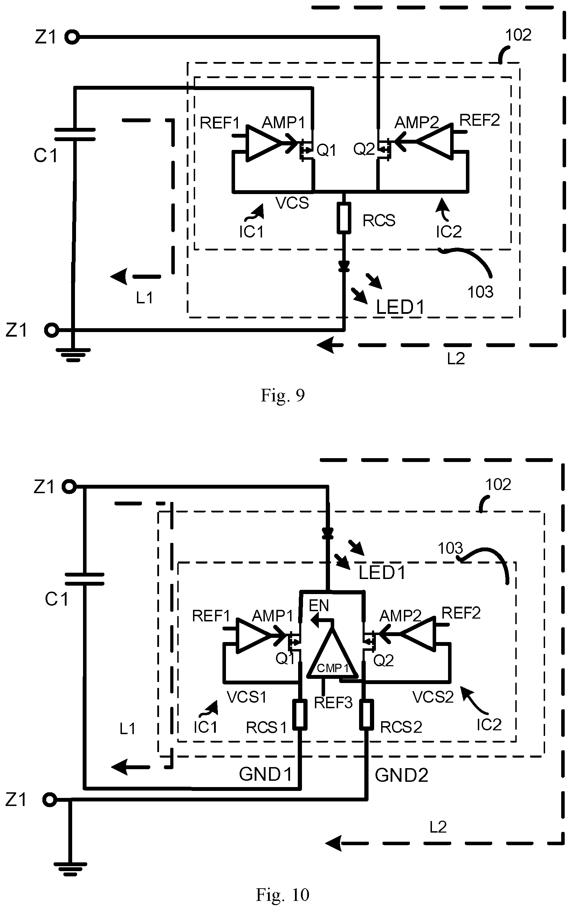

Fig. 9 is a schematic diagram illustrating the structure of a load branch 102 according to one embodiment of the present invention. As shown in Fig. 9, the load branch 102 is capable to be coupled into two different current paths. When the input capacitor C1 supplies power to the load branch, the first current path is used which forms a part of the first current loop. When the output terminals of the rectifier bridge set supply power to the load branch, the second current path is used, which forms a part of the second current loop. The load branch 102 may have three terminals. The first current path may be formed using first and second ones of the terminals, while the second current path may be formed by using first and third ones of the terminals. In other implementations, the load branch 102 may also accomplish the two different current paths with four terminals as is conventional, which is, however, will not be further described herein. In the load branch 102, the LED constant-current controller 103 includes a first constant-current source IC1 and a second constant-current source IC2. The second constant-current source IC2 is configured to control a current flowing from one set of output terminals of the rectifier bridge set Z1 to the LED load LED1, i.e., in the second current loop. The first constant-current source IC1 is configured to control a current flowing directly from the input capacitor C1 to the LED load LED1, i.e., in the first current loop. This enables a constant current in either of the first and second current loops when it is turned on, thus ensuring a constant current flowing through the LED load LED1 in each half cycle.

In the illustrated embodiment, the load branch is designed for the case of the input capacitor C1 and one set of output terminals of the rectifier bridge set Z1 having a common negative terminal (i.e., a common ground terminal) and is, for example, suitable for the circuit structures of the rectifier bridge set Z1 and the capacitive branch 101 in the embodiments of Figs. 5 and 7. In this case, a negative output terminal of the rectifier bridge set Z1 is connected to both a negative electrode of the input capacitor C1 and the first terminal of the load branch 102 and provides a ground terminal for the first and second current loops. In the current path leading from one set of output terminals of the rectifier bridge set Z1 toward the LED load LED1, the second constant-current source IC2 is arranged upstream of the LED load LED1. In the current path leading from the input capacitor C1 toward the LED load LED1, the first constant-current source IC1 is arranged upstream of the LED load LED1. In the illustrated embodiment, an input terminal of the first constant-current source IC1 serves as the second terminal of the load branch 102, and an input terminal of the second constant-current source IC2 serves as the third terminal of the load branch 102. With this arrangement, the commonly grounded first and second current loops can be separately controlled to supply power to the LED load LED1.

In the illustrated embodiment, as the first and second current loops are commonly grounded, feedback control of the first and second constant-current sources IC1, IC2 can be accomplished using a single current feedback signal VCS. In the illustrated embodiment, the current feedback signal VCS is generated by a feedback resistor RCS. The first current loop is the constant current feedback controlled based on a first reference current value REF1, and the second current loop is constant current feedback controlled based on a second reference current value REF2. The first constant-current source IC1 compares the first reference current value REF1 with the current feedback signal VCS and generates a first current control signal AMP1 for controlling a degree of conduction of a power transistor Q1 so that a current in the first loop is kept constant. The second constant-current source IC2 compares the second reference current value REF1 with the current feedback signal RCS and generates a second current control signal AMP2 for controlling a degree of conduction of a power transistor Q2 so that a current in the second loop is kept constant.

Preferably, the second reference value REF2 is configured to be greater than the first reference value REF1. In this way, after the second current loop is turned on, the current feedback signal RCS will be always greater than the first reference value REF1, causing AMP1 to gradually reduce a current in the first current loop through a negative feedback mechanism and eventually turn off the first current loop. Thus, power source switching between the rectified mains power and the input capacitor C1 with the turn-on voltage of the load branch 102 as a threshold can be achieved in a very simple manner without using a separate control circuit.

Fig. 10 is a schematic diagram illustrating the structure of a load branch 102 according to another embodiment of the present invention. Differing from the embodiment of Fig. 9, the load branch in this embodiment is designed for the case of the input capacitor C1 and one set of output terminals of the rectifier bridge set Z1 having a common positive terminal (i.e., a common high-side terminal) and is, for example, suitable for the circuit structures of the rectifier bridge set Z1 and the capacitive branch 101 in the embodiments of Figs. 6 and 8. In this case, a positive output terminal of the rectifier bridge set Z1 is connected to both a positive terminal of the input capacitor C1 and the first terminal of the load branch 102 and provides a positive (high-side) terminal for the first and second current loops. In the current path leading from one set of output terminals of the rectifier bridge set Z1 toward the LED load LED1, the second constant-current source IC2 is arranged downstream of the LED load LED1. In the current path leading from the input capacitor C1 toward the LED load LED1, the first constant-current source IC1 is arranged downstream of the LED load LED 1. In the illustrated embodiment, a ground terminal GND1 of the first constant-current source IC1 serves as the second terminal of the load branch 102, and a ground terminal GND2 of the second constant-current source IC2 serves as the third terminal of the load branch 102. With this arrangement, first and second current loops having the common high-side terminal can be separately controlled to supply power to the LED load LED1.

In the illustrated embodiment, as the first and second current loops have the common high-side terminal, the first and second constant-current sources IC1, IC2 can perform the feedback control by using distinct feedback signals VCS1, VCS2, which are generated by respective feedback resistors RCS 1, RCS2. Moreover, the first and second constant-current sources IC1, IC2 have the separate ground terminals GND1 and GND2. Similar to the embodiment of the Fig. 9, the first current loop is constant current feedback controlled based on a first reference current value REF1, and the second current loop is constant current feedback controlled based on a second reference current value REF2.

Preferably, the first reference current value REF1 and the second reference current value REF2 are equal to each other. In the embodiment of Fig. 9, since different reference current values are used, switching between the power supply loops (power sources) in each half cycle may cause minor low-frequency ripple in the LED current. The equal first and second reference current values REF1, REF2 used in the embodiment of Fig. 10 can get rid of such minor low-frequency ripple, further optimizing the flicker elimination performance.

The embodiment of Fig. 10 further provides another control circuit for power source switching. As shown in Fig. 10, the feedback signal VCS2 for the second constant-current source is additionally used for controlling switching of power source . VCS2 is fed to a comparator CMP1, where it is compared with a current threshold REF3. An output terminal of CMP1 is connected to an enable terminal EN of the first constant-current source IC1. In each half cycle, if the feedback signal VCS2 is greater than REF3, it is considered that the voltage of the rectified mains power is higher than the turn-on voltage of the load branch 102. In response, the output of CMP1 turns off the first constant-current source IC1, thereby cutting off the first current loop. Otherwise, if the feedback signal VCS2 is smaller than REF3, it is considered that the voltage of the rectified mains power has dropped below the turn-on voltage of the load branch 102. Responsively, the second current loop is opened, and the output of the CMP1 again enables the first constant-current source IC1 to turn on the first current loop.

Those of ordinary skill in the art would appreciate that the above control circuits for power source switching are exemplary rather than limiting. Any conventional circuit implementation capable of switching the power supply loops according to a given condition can be used for such a control circuit, which is, however, not further described herein.

In the embodiments of Figs. 9 and 10, the first and second constant-current sources IC1, IC2 may be implemented as linear circuits. However, those of ordinary skill in the art would appreciate that, in other embodiments, constant-current control of the current loops may also be accomplished with switched-mode constant-current circuits, charge pumps or any other suitable circuits with constant-current source functions, and the present invention is not limited in this regard.

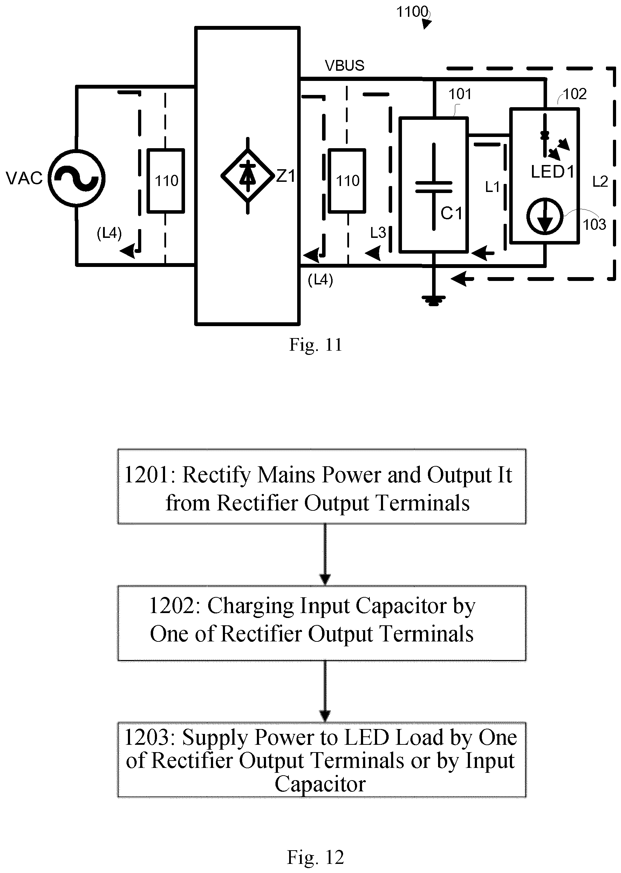

Fig. 11 is a schematic diagram illustrating the structure of an LED driver circuit 1100 according to a further embodiment of the present invention. Compared with the embodiment of Fig. 3, the embodiment of Fig. 11 further adds a bleeder branch 110, which may be connected between input terminals of the mains power or between one set of output terminals of the rectifier bridge set Z1, and a fourth current loop can be formed by the bleeder branch 110 with input terminals of the mains power or one set of output terminals of the rectifier bridge set Z. The fourth current loop is configured to controllably generate a bleeder current in case of the presence of a thyristor dimmer in the circuit environment.

In one embodiment, preferably, in each half cycle, the bleeder branch 110 is configured to start providing the bleeder current at a time instant, which is not later than a time instant at which the voltage of the rectified mains power rises to reach the turn-on voltage of the load branch. As such, in each half cycle of the mains power, the formation of the fourth current loop is not later than the formation of the second current loop. In this way, on the one hand, in the event of an edge for the thyristor dimmer having arrived, a latching and holding current can be provided for the thyristor dimmer to maintain the thyristor dimmer ON during this period and prevent it from being turned off accidentally due to an insufficient input current. On the other hand, the input current harmonic rejection performance can be additionally optimized, which is particularly helpful in satisfying the requirement that the input current ramps up to 5% of the peak value at a phase angle not greater than 60 degrees.

In another embodiment, in each half cycle, the bleeder branch 110 is also configured to stop providing the bleeder current at a time instant, which is not earlier than a time instant at which the voltage of the rectified mains power drops below the turn-on voltage of the load branch. As such, in each half cycle of the mains power, the fourth current loop is turned off at a time instant not earlier than a time instant when the second current loop is turned off. In addition to maintaining the thyristor dimmer ON and preventing it from being turned off accidentally, this can even optimize the input current harmonic rejection performance, which is particularly helpful in satisfying the requirement that the input current decreases to 5% of the peak value at a phase angle not smaller than 90 degrees. Here, the term "stop" means that the bleeder current will not be provided at any time in the remaining period of the same cycle.

Fig. 12 is a flowchart of a method for controlling an LED driver circuit according to one embodiment of the present invention. The method includes the steps of:
1201: rectifying mains power and outputting it from rectifier output terminals;
1202: charging an input capacitor C1 by one of the rectifier output terminals; and
1203: supplying power to an LED load LED1 by one of the rectifier output terminals or by the input capacitor C1,
wherein a turn-on voltage of a branch of the LED load serves as a threshold of the rectified mains power for alternatively selecting the input capacitor or one of the rectifier output terminals as a power supply of the LED load.

In one embodiment, switching the power source for the LED load LED1 between the input capacitor C1 and one of the rectifier output terminals with the turn-on voltage of the branch where the LED load LED1 is arranged being taken as the threshold includes:
when a voltage of the rectified mains power is lower than the turn-on voltage of the branch where the LED load LED1 is arranged, forming a first current loop by the LED load LED1 and the input capacitor C1; and
when the voltage of the rectified mains power is equal to or above the turn-on voltage of the branch where the LED load LED1 is arranged, opening the first current loop and forming a second current loop by the rectifier output terminal and the LED load LED1.

In particular, the method may further include, in each half cycle of the mains power, when the voltage of the rectified mains power is higher than a voltage across the input capacitor C1, forming a third current loop for charging the input capacitor by one of the rectifier output terminals and the input capacitor C1.

The above description of the method and the steps thereof according to the embodiment of the present invention is merely illustrative and is not intended to limit the invention in any sense. Additionally, some well-known control steps and control parameters used therein are not described or not described in detail so as to make the description of the present invention clear, concise and easy to understand. Those skilled in the art to which the present invention pertains would appreciate that the numbering of the steps as used in the above description of the method and the steps thereof according to the various embodiment of the present invention is not intended to indicate a mandatory sequential order of the steps. These steps are not limited to being carried out in the order as numbered, because they may also be carried out in a different order, or two or more of them may be carried out in parallel.

Although the present invention has been described with reference to several exemplary embodiments, it is to be understood that the terminology used is intended to be in the nature of description and exemplification rather than of limitation. As the present invention can be embodied in various specific forms without departing from the spirit or essential characteristics thereof, it is to be understood that the foregoing embodiments are not limited to the above disclosed details but should be broadly interpreted within the spirit and scope as defined by the appended claims. Accordingly, any and all changes and modifications that come within the scope of the appended claims and equivalents thereof are all intended to be embraced therein.

## Claims

1. A light-emitting diode (LED) driver circuit for receiving and converting a mains power to drive an LED load and to mitigate flicker caused by a ripple from the mains power, wherein the LED driver circuit comprises:
a rectifier bridge set having one set of input terminals and at least one set of output terminals, wherein the rectifier bridge set is configured to receive and rectify the mains power and to output a rectified mains power from the output terminals;
a capacitive branch connected between one set of output terminals of the rectifier bridge set, wherein the capacitive branch at least comprises an input capacitor; and
a load branch comprising an LED load and an LED constant-current controller;
wherein in each half cycle of the mains power, when a voltage of the rectified mains power from the rectifier bridge set is lower than a turn-on voltage of the load branch, the input capacitor supplies power to the load branch; and wherein when a voltage of the rectified mains power from the rectifier bridge set is equal to or above the turn-on voltage of the load branch, the load branch receives power directly from the output terminals of the rectifier bridge set, and the input capacitor stops supplying power to the load branch.

2. The driver circuit of claim 1, wherein the capacitive branch and the load branch are connected to an identical set of output terminals of the rectifier bridge set, and wherein the capacitive branch further comprises an isolation device configured to enable charging from the output terminals of the rectifier bridge set to the input capacitor and to disable discharging from the input capacitor to the output terminals of the rectifier bridge set.

3. The driver circuit of claim 2, wherein the isolation device is a diode.

4. The driver circuit of claim 1, wherein the rectifier bridge set comprises two sets of output terminals, wherein the capacitive branch is connected to a first set of output terminals, and the load branch is connected to a second set of output terminal, and wherein the second set of output terminals is distinct from the first set of output terminals.

5. The driver circuit of claim 4, wherein the first and second sets of output terminals share a common output terminal, wherein the rectifier bridge set comprises six diodes, the first set of output terminals forming a first rectifier bridge together with a first diode, a second diode, a third diode and a fourth diode, and the second set of output terminals forming a second rectifier bridge together with the third and fourth diodes and a fifth diode and a sixth diode, and wherein the third and fourth diodes are connected to the common output terminal.

6. The driver circuit of claim 1, wherein in each half cycle of the mains power, the voltage of the rectified mains power from the rectifier bridge set rising above the turn-on voltage of the load branch is earlier than the rectifier bridge set beginning charging the input capacitor through the output terminals thereof.

7. The driver circuit of claim 1, wherein the load branch is capable to be coupled into two different current paths, wherein a first current path is applied for the input capacitor supplying power to the load branch; and wherein a second current path is applied for the output terminals of the rectifier bridge set supplying power to the load branch.

8. The driver circuit of claim 7, wherein the load branch has three terminals, wherein the first current path is formed via a first terminal and a second terminal, and wherein the second current path is formed via the first terminal and a third terminal.

9. The driver circuit of claim 1, wherein the LED constant-current controller comprises a first constant-current source and a second constant-current source, wherein the first constant-current source is configured to control a current flowing directly from one set of output terminals of the rectifier bridge set toward the LED load, and wherein the second constant-current source is configured to control a current flowing from the input capacitor toward the LED load.

10. The driver circuit of claim 9, wherein negative output terminals of one set of output terminals of the rectifier bridge set are connected to a negative terminal of the input capacitor, wherein the first constant-current source is arranged upstream of the LED load in a path of the current flowing directly from the set of output terminals of the rectifier bridge set toward the LED load, and wherein the second constant-current source is arranged upstream of the LED load in a path of the current flowing from the input capacitor toward the LED load.

11. The driver circuit of claim 10, wherein the first and second constant-current sources share a single current feedback signal.

12. The driver circuit of claim 10, wherein the first constant-current source has a first current reference value, and wherein the second constant-current source has a second current reference value smaller than the first current reference value.

13. The driver circuit of claim 9, wherein positive output terminals of one set of output terminals of the rectifier bridge set are connected to a positive terminal of the input capacitor, wherein the first constant-current source is arranged downstream of the LED load in a path of the current flowing directly from the set of output terminals of the rectifier bridge set toward the LED load, and wherein the second constant-current source is arranged downstream of the LED load in a path of the current flowing from the input capacitor toward the LED load.

14. The driver circuit of claim 13, wherein the first and second constant-current sources use distinct feedback signals and are grounded separately.

15. The driver circuit of claim 13, wherein the first and second constant-current sources share an identical current reference value.

16. The driver circuit of claim 1, further comprising a bleeder branch connected between input terminals of the mains power or between one set of output terminals of the rectifier bridge set, wherein the bleeder branch is configured to controllably generate a bleeder current at the input terminals of the mains power.

17. The driver circuit of claim 16, wherein in each half cycle, the bleeder branch starts generating the controllable bleeder current no later than the voltage of the rectified mains power rising to reach the turn-on voltage of the load branch.

18. The driver circuit of claim 16, wherein in each half cycle, the bleeder branch stops providing the controllable bleeder current no earlier than the voltage of the rectified mains power dropping below the turn-on voltage of the load branch.

19. The driver circuit of any one of claims 1 to 18, wherein the driver circuit is configured to, in each half cycle of the mains power, enable an input current to the driver circuit to rise to 5% of a peak value of the input current at a phase angle not greater than 60 degrees.

20. The driver circuit of any one of claims 1 to 18, wherein the driver circuit is configured to, in each half cycle of the mains power, enable an input current to the driver circuit to drop to 5% of a peak value of the input current at a phase angle not smaller than 90 degrees.

21. A light-emitting diode (LED) driver circuit for receiving and converting a mains power to drive an LED load and to mitigate flicker caused by a ripple from the mains power, wherein the LED driver circuit comprises an input capacitor capable of receiving a rectified mains power for performing charging actions, a rectifier bridge set for rectifying the mains power, and an LED load, and wherein in each half cycle of the mains power, a turn-on voltage of a branch of the LED load serves as a threshold of the rectified mains power for alternatively selecting the input capacitor or the rectified mains power as a power supply of the LED load.

22. The driver circuit of claim 21, wherein: when a voltage of the rectified mains power is lower than the turn-on voltage of the branch of the LED load, the LED load and the input capacitor form a first current loop; and when a voltage of the rectified mains power is equal to or above a turn-on voltage of the branch of the LED load, the first current loop is opened, and a set of output terminals of the rectifier bridge set and the LED load form a second current loop.

23. The driver circuit of claim 22, wherein in a first half of each half cycle of the mains power, when the voltage of the rectified mains power rises to reach a voltage across the input capacitor, the set of output terminals of the rectifier bridge set further forms, together with the input capacitor, a third current loop for charging the input capacitor.

24. The driver circuit of claim 23, wherein in the first half of each half cycle of the mains power, the second current loop is formed earlier than the third current loop.

25. The driver circuit of claim 23, wherein in a second half of each half cycle of the mains power, when the voltage of the rectified mains power is lower than the voltage across the input capacitor, the third current loop is opened.

26. The driver circuit of claim 25, comprising an isolation device for controlling the formation and the opening of the third current loop.

27. The driver circuit of claim 26, wherein the isolation device is a diode connected to the input capacitor.

28. The driver circuit of claim 25, wherein the rectifier bridge set has two sets of output terminals that are distinct, wherein a first set of output terminals is configured to form the second current loop, and a second set of output terminals is configured to form the third current loop.

29. The driver circuit of claim 28, wherein the first and second sets of output terminals have a common terminal, and wherein the common terminal is applied both in the second and third current loops.

30. The driver circuit of claim 28, wherein operational currents flowing through the first and second current loops are both constant.

31. The driver circuit of claim 21, wherein the first and second current loops identically share a current feedback signal, wherein the current feedback signal is configured to keep operational currents of both the first and second current loops constant.

32. The driver circuit of claim 31, wherein negative output terminals of one set of the rectifier bridge set are connected to a negative terminal of the input capacitor and serve as a ground terminal for both the first and second current loops, wherein the first current loop is constant current feedback controlled based on a first reference current value, and wherein the second current loop is constant current feedback controlled based on a second reference current value.

33. The driver circuit of claim 32, wherein the second reference current value is greater than the first reference current value, configured to turn the first current loop off after the second current loop is turning on by virtue of the current feedback signal being always greater than the first reference current value

34. The driver circuit of claim 31, wherein positive output terminals of one set of output terminals of the rectifier bridge set are connected to a positive terminal of the input capacitor and serve as a positive input terminal for the first and second current loops, wherein the first and second current loops have distinct current feedback signals and are separately grounded, wherein the current feedback signals are compared with a first reference current value and a second reference current value in order to respectively control operational currents of the first and second current loops to maintain constant.

35. The driver circuit of claim 34, wherein the first reference current value is equal to the second reference current value.

36. The driver circuit of claim 22, further comprising a fourth current loop formed by a bleeder branch with input terminals of the mains power or the set of output terminals of the rectifier bridge set, wherein the fourth current loop is configured to controllably generate a bleeder current in case of a presence of a thyristor dimmer in a circuit environment.

37. The driver circuit of claim 36, wherein in each half cycle of the mains power, the fourth current loop is formed no later than the second current loop.

38. The driver circuit of claim 36, wherein in each half cycle of the mains power, the fourth current loop is opened no earlier than the second current loop.

39. The driver circuit of any one of claims 21 to 38, wherein the driver circuit is configured to, in each half cycle of the mains power, enable an input current to the driver circuit to rise to 5% of a peak value of the input current at a phase angle not greater than 60 degrees.

40. The driver circuit of any one of claims 21 to 38, wherein the driver circuit is configured to, in each half cycle of the mains power, enable an input current to the driver circuit to drop to 5% of a peak value of the input current at a phase angle not smaller than 90 degrees.

41. A method for controlling a light-emitting diode (LED) driver circuit to mitigate a flicker problem therewith, wherein the method comprises:
rectifying mains power and outputting the rectified mains power from rectifier output terminals;
charging an input capacitor by one of the rectifier output terminals; and
supplying power to an LED load by one of the rectifier output terminals or by the input capacitor,
wherein a turn-on voltage of a branch of the LED load serves as a threshold of the rectified mains power for alternatively selecting the input capacitor or one of the rectifier output terminals as a power supply of the LED load.

42. The method of claim 41, wherein alternatively selecting the input capacitor or one of the rectifier output terminals as a power supply of the LED load by a turn-on voltage of a branch of the LED load serving as a threshold of the rectified mains power comprises:
when the voltage of the rectified mains power is lower than the turn-on voltage of the branch of the LED load, a first current loop is formed by the LED load and the input capacitor; and
when the voltage of the rectified mains power is equal to or above the turn-on voltage of the branch of the LED load, the first current loop is opened, and a second current loop is formed by the rectifier output terminal and the LED load.

43. The method of claim 42, wherein in each half cycle of the mains power, when the voltage of the rectified mains power is higher than a voltage across the input capacitor, a third current loop for charging the input capacitor is further formed by one of the rectifier output terminals and the input capacitor.
